Europäisches Patentamt

European Patent Office

Office européen des brevets

(19)

(11) Veröffentlichungsnummer: **0 111 862**
**A2**

(12) # EUROPÄISCHE PATENTANMELDUNG

(21) Anmeldenummer: 83112459.9

(22) Anmeldetag: 10.12.83

(51) Int. Cl.³: **C 04 B 39/00**
C 04 B 19/04, B 32 B 5/00
E 04 C 2/26

(30) Priorität: 16.12.82 DE 3246621

(43) Veröffentlichungstag der Anmeldung:
27.06.84 Patentblatt 84/26

(84) Benannte Vertragsstaaten:
AT BE CH DE FR LI LU NL

(71) Anmelder: DYNAMIT NOBEL AKTIENGESELLSCHAFT
Postfach 1209
D-5210 Troisdorf, Bez. Köln(DE)

(72) Erfinder: Neuschäffer, Karlheinz, Dr.
Böttnerstrasse 6
D-5653 Leichlingen(DE)

(72) Erfinder: Engels, Hans-Werner
Grabenstrasse 53
D-5210 Troisdorf-Sieglar(DE)

(72) Erfinder: Spielau, Paul, Dr.
Van-Gogh-Platz 10
D-5210 Troisdorf-Eschmar(DE)

(72) Erfinder: Zoche, Günter, Dr.
Königsheimstrasse 13
D-5300 Bonn(DE)

(54) Bauteilverkleidungen aus anorganischen Formmassen.

(57) Bauteilverkleidungen mit einem massiven den Sichtteil bildenden Formkörper und einem mit diesem verbundenen Schaumkörper aus anorganischem und/oder organischen Schaum können durch Formgebung und Wärmehärtung aus anorganischen wasserhaltigen Formmassen hergestellt werden, wobei die Formmasse ein reaktionsfähiges Oxidgemisch eine Alkalisilikat-Lösung ggf. Alkalihydroxid und Füllstoffe und Hilfsstoffe enthält.

Fig 1

EP 0 111 862 A2

Troisdorf, den 1. Dez. 1983
OZ 82084 MG/Bd

DYNAMIT NOBEL AKTIENGESELLSCHAFT

Troisdorf Bez. Köln

Bauteilverkleidungen aus anorganischen Formmassen

Die Erfindung betrifft Bauteilverkleidungen insbesondere Fassadenplatten, die aus festen steinartigen Formkörpern, die aus wasserhaltigen fließfähigen oder preßbaren Formmassen durch Formgebung und Härtung bei niedrigen Temperaturen hergestellt werden.

Es ist bekannt, aus keramischen Materialien durch Brennen bei hohen Temperaturen bis weit über 800°C Formkörper wie Klinker, Platten o.dgl. herzustellen. Hierbei sind hohe Temperaturen zum Brennen und daher ein hoher Energieverbrauch erforderlich. Da keramische Materialien bei der hohen Brenntemperatur schwinden und reißen, ist die Einhaltung genauer Maße schwierig.
Weiterhin gibt es zahlreiche zementgebundene Bauteile, deren Bruchfestigkeit bei flächiger Ausbildung gering ist, sofern nicht Fasermaterialien wie der gesundheitsgefährdende Asbest enthalten sind.
Formkörper aus Alkalisilikat-Lösungen andererseits benötigen schwer beschaffbare Reaktionspartner wie das nur durch Glühen herstellbare Metakaolin (FR-Patentanmeldung 79.22041).

und können bei Bewitterung Ausblühungen zeigen und eignen sich dann nicht für Bauteilverkleidungen.

Es bestand daher die Aufgabe, Bauteilverkleidungen aus leicht zugängigen anorganischen Rohstoffen einfach und energiesparend durch Härten bei niedriger Temperatur herzustellen, die witterungsbeständig, maßhaltig und ausreichend biegefest sind.

Gegenstand der Erfindung ist eine Bauteilverkleidung, insbesondere Fassadenplatten, die einen massiven den Sichtteil bildenden Formkörper aus einer ausgehärteten anorganischen Formmasse mit einem spezifischen Gewicht von 1,3 bis 2,5 g/cm$^3$, vorzugsweise 1,5 bis 2,0 g/cm$^3$, hergestellt aus

10 bis 30 Gew.-% einer wäßrigen kalialkalischen Kaliumsilikatlösung,

15 bis 40 Gew.-% eines reaktionsfähigen staubförmigen Oxidgemisches mit Gehalten von amorphem $SiO_2$ und Aluminiumoxyd und

20 bis 75 Gew.-% Füllstoffe

und einem mit dem Sichtteil verbundenen Saumkörper auf Basis von anorganischem und/oder organischem Schaumstoff enthält.

Durch Reaktion von staubförmigen Oxidgemischen mit Gehalten von amorphem $SiO_2$ und $Al_2O_3$ mit Alkalisilikat-Lösungen unter Steinbildung bei Temperaturen bis 200°C werden erfindungsgemäß aus gießfähigen oder preßfähigen Formmassen Formkörper von hoher Festigkeit, hoher Temperaturbeständigkeit und sehr exakter Maßhaltigkeit hergestellt, die bei der Formgebung die Gestalt beliebig geformter Bauteilverkleidungen besonders auch von großen Abmessungen oder besonders feiner Strukturierung erhalten werden können.

- 3 -

Durch den Verbund mit einem Schaumstoffkörper, der bevorzugt homogen bei der Herstellung mit dem massiven Formkörper verbunden wird, ist eine hohe Wärme- und Schalldämmung bei gleichzeitig ausreichenden mechanischen Eigenschaften, wie sie für Detailverkleidungen, wie Fassadenplatten gefordert werden, erzielbar. Insbesondere ist die erfindungsgemäß vorgeschlagene Kombination von anorganischem Schaumkörper, der eine hohe Stabilität verleiht und aufgrund seiner Offenzelligkeit zur Schalldämmung beträgt und organischen Hart-Schaumstoffkörpern, wie Polystyrol-, Polyurethan- oder Phenolharzschaum, die eine gute Wärmedämmung verleihen, besonders vorteilhaft und fortschrittlich.

Die Formkörper erreichen durch die Härtung Biegebruchfestigkeiten im Bereich von 10 bis 35 N/mm$^2$ oder ggf. mehr. Die Formkörper ermöglichen eine sehr gute Formtreue und geben jede Einzelheit der Form genau wieder, so daß auch sehr dünne Formkörper, vorgegebene Oberflächenstrukturen, Aussparungen und Hinterschneidungen maßgenau wiedergegeben werden.
Die Neigung zur Rißbildung und Formschwindung ist sehr gering, so daß besonders auch Formkörper von großen Dimensionen und großflächige flache Formkörper herstellbar sind.

Die Bauteilverkleidungen können beispielsweise als Verkleidungen für Wände, Fassaden, Dächer, als Bodenplatten auf der Innen- oder Außenseite und ggf. in Bauteilen von Gebäuden dienen.

Eine besonders vorteilhafte Ausgestaltung der Bauteilverkleidung ist dadurch gekennzeichnet, daß an dem mit einer insbesondere rechteckigen Grundfläche ausgebildeten Formkörper längs zweier aufeinanderfolgenden Seiten eine mit der Unterseite des Formkörpers abschließende vorstehende Rippe angeformt ist und der Schaumstoffkörper im Bereich

- 4 -

der Rippen fluchtend mit den Seiten des Formkörpers ausgebildet ist und längs der beiden von Rippen freien Seiten des Formkörpers in einer etwa der Breite der Rippen entsprechenden Breite über den Formkörper vorsteht. Durch die insbesondere versetzte Anordnung des Schaumkörpers wird eine erhöhte Wärmedämmung erzielt und insbesondere Kältebrücken im Fugenbereich aneinanderstoßender Bauteilverkleidungselemente vermieden.

Mehrschichtige Bauteilverkleidungen aus einer Schaumschicht und einer massiven Schicht oder aus verschieden gefärbten oder strukturierten Schichten sind durch Gießen verschiedener Formmassen - naß in naß - oder durch Gießen auf beliebige vorgebildete, bevorzugt flächige Formkörper herstellbar.

In weiterer Ausgestaltung der Erfindung ist die Sichtfläche des Sichtteiles strukturiert, geprägt, ornamentiert o.dgl. Reliefstrukturen, Nuten und Fugen, Abbildungen natürlicher Materialoberflächen, sich abhebende Schriftbänder o.dgl. sind allein durch genaueste Abbildungen aller Einzelheiten der verwendeten Form zu erhalten. Wenn gewollt, können die Verkleidungen, besonders aus Schaumkörpern, durch Sägen, Fräsen, Bohren o.dgl. nachträglich bearbeitet werden.

Das erfindungsgemäße Bauteilverkleidungselement kann mit Verstärkungseinlagen aus Metall und/oder Glasfasermatten, die in die Formmasse des Sichtteiles und/oder Schaumstoffkörpers eingebettet sind, versehen sein. Halterungen an der Rückseite können beim Gießen oder Pressen ausgebildet oder als Stifte, Bänder o.dgl. aus Metall dauerhaft fest eingegossen werden, so daß eine einfache Befestigungsmöglichkeit z.B. der Fassadenplatte an einer Gebäudewand möglich ist. Verbundteile aus Materialien beliebiger Art mit poröser Rückseite oder Verankerungen auf dieser können durch Aufgießen der Formmasse und Aushärten, besonders auch von

- 5 -

Schäummassen, erhalten werden. Die Bauteilverkleidungselemente aus massiven Materialien mit angegossenem Schaumkörper haben gute Werte der Wärme- und Schalldämmung und sind zugleich selbsttragend ausgebildet.

Eine nachträgliche Bedeckung der Oberflächen durch Imprägnieren, Lackieren, Glasieren o.dgl. ist möglich, z.B. auf Acrylharzbasis. Die massiven gehärteten Formkörper haben je nach Zusammensetzung Dichten von 1,5 bis 2,0 g/cm$^3$, die Schaumkörper aus anorganischen Massen haben Dichten bis herab etwa zu 0,2 g/cm$^3$, aus organischen Massen herab bis zu 0,02 g/cm$^3$.

Eine bevorzugte Ausbildung der Bauteilverkleidung sieht einen Schaumstoffkörper vor, der aus einer anorganischen ausgehärteten und geschäumten Formmasse hergestellt aus

20 bis 60 Gew.-% einer wäßrigen kalialkalischen Kaliumsilikatlösung

30 bis 80 Gew.-% eines reaktionsfähigen staubförmigen Oxidgemisches mit Gehalten von amorphem SiO$_2$ und Aluminiumoxyd und

0 bis 50 Gew.-% Fillstoffe und

0,05 - 5 Gew.-% Schäummittel mit einer Temperatur der Gasbildung zwischen 20 und 95°C

besteht.

Schaumkörper und massiver Formkörper basieren auf den gleichen anorganischen Rohstoffen und ergeben ein unbrennbares Produkt, was für den Einsatz im Baubereich besonders wichtig ist.

Bei einer vorteilhaften Verfahrensweise zum Herstellen der Bauteilverkleidungselemente wird in eine Feststoffmischung aus 15 bis 40 Gew.-Teilen reaktionsfähigem Oxidgemisch mit Gehalten von amorphem $SiO_2$ und Aluminiumoxid und

20 bis 75 Gew.-% Füllstoffen,
10 bis 30 Gew.-% einer 28 bis 65 Gew.-% wäßrigen

kalialkalischen Lösung von Kaliumsilikat in der 0,5 bis 2,5 Gew.-Teile $K_2O$ bevorzugt 0,6 bis 1,6 Gew.-Teile $K_2O$ je 1 Gew.-Teil gelöstes $SiO_2$ enthalten sind, eingemischt werden und diese Mischung in eine Form zu dem den Sichtteil bildenden Formkörper gegossen bzw. eingeschüttet, dann ggf. entlüftet und verpreßt und bei Temperaturen von 50 bis 200°C vorzugsweise unter 100°C ausgehärtet wird und danach eine schäumfähige Mischung aus 20 bis 60 Gew.-% einer wäßrigen kalialkalischen Kaliumsilikatlösung, in der 0,5 bis 2,5 vorzugsweise 0,6 bis 1,6 Gew.-Teile $K_2O$ je Gew.-Teil gelöstes $Si/_2$ enthalten sind,

30 bis 80 Gew.-% eines reaktionsfähigen staubförmigen Oxidgemisches mit Gehalten von amorphem $SiO_2$ und Aluminiumoxid, ggf. bis zu 50 Gew.-% Füllstoffen sowie 0,05 bis 5 Gew.-% Schäummittel mit einer Temperatur der Gasbildung zwischen 20°C und 95°C in die Form auf den Sichtteil geschüttet und unter Ausschäumen und Aushärten bei Temperaturen von 50 bis 200°C, vorzugsweise unter 100°C zu dem Schaumkörper sich mit dem Sichtteil verbindet.

Es ist natürlich auch möglich, erst den Schaumkörper herzustellen und auszuhärten und dann hierauf die Formmasse für den massiven Sichtkörper aufzubringen und auszuhärten.

Eine vorteilhafte energie- und zeitsparende Arbeitsweise, die zugleich einen homogenen haftfesten Verbund ergibt, ist das Naß-in-Naß-Verfahren, wobei auf die noch nicht ausgehärtete Formmasse des Sichtteiles die schäumfähige Mischung aufgebracht wird und das Aushärten von Sichtteil-Mischung und Schaumkörper-Mischung gleichzeitig erfolgt.

Ggf. kann die Formmasse des Sichtteils mit einem organischen Schaumstoffkörper in einer Form zusammengebracht und beim Aushärten sich mit dieser verbinden. Für die Herstellung eines erfindungsgemäßen Dreier-Verbundes wird bevorzugt so vorgegangen, daß ein organischer Schaumstoffkörper derart in die Form eingelegt wird, daß beim Ausschäumen und Aushärten der anorganischen Schaumkörper-Mischung ein Verbund hergestellt wird. Dieser anorganische Schaumstoffkörper kann, wie vorangehend erläutert, mit dem Sichtteil verbunden werden.

Vorzugsweise erhalten die Formmassen 1,3 bis 10, sehr bevorzugt 2 bis 6 Gew.-Teile Oxidgemisch, 0,5 bis 2,5, sehr bevorzugt 0,8 bis 1,6 Gew.-Teile $K_2O$ je Gew.-Teil gelöstes $SiO_2$ aus der Alkalisilikat-Lösung. $K_2O$ ist als alleiniger oder überwiegender Alkalibestandteil bevorzugt, da Na Ausblühungen bei der Bewitterung der Bauteilverkleidung zeigt.

Der Wassergehalt der Formmassen kann etwa 20 bis 60 Gew.-% bezogen auf diese aktiven Bestandteile der Formmasse d.h. ohne Berechnung der Füllstoffe betragen.
Füllstoffe können in Mengen bis 1000, vorzugsweise bis 400 g, je 100 g der steinbildenden Komponenten enthalten sein.

- 8 -

Geeignete Formen können aus Metallen, Holz, Kunststoffen wie Thermoplasten, Silikongumme oder Schaumkunststoffen bestehen. Großflächige Formen erfordern eine Verstärkung. Die Formen können teilweise oder bevorzugt vollständig, z.B. mit Hilfe einer Entlüftungsöffnung, gefüllt werden.

Die Alkalisilikat-Lösungen sind bevorzugt die bekannten stark alkalischen wäßrigen Lösungen von Alkaliwasserglas d.h. von im Schmelzfluß erstarrten glasigen wasserlöslichen Alkalisilikaten, welche durch Zusammenschmelzen von Quarzsand und Alkalicarbonaten bzw. -hydroxiden erhalten werden. Molverhältnisse von 1,2 bis 5 Mol $SiO_2$ je Mol Alkalioxid und Wassergehalte von 40 bis über 70 Gew.-% sind möglich, wobei die wasserärmeren Lösungen bevorzugt sind. Im Sinne der vorliegenden Erfindung kann eine wäßrige Lösung von Alkalisilikat auch durch Auflösen von amorpher wasserhaltiger Kieselsäure in Alkalihydroxid-Lösungen oder ggf. durch Zugabe von festem Alkalihydroxid unter Verflüssigung beim Rühren erhalten werden. Eine Filtration oder Reinigung ist trotz vorhandener Verunreinigungen nicht erforderlich. So hergestellte Alkalisilikat-Lösungen weichen bei gleichem Alkali/$SiO_2$-Verhältnis in der Viskosität häufig in der von handelsmäßigem Wasserglas ab.

Das erfindungsgemäß einsetzbare Oxidgemisch mit Gehalten von amorphem $SiO_2$ und Aluminiumoxid kann stark wechselnde Gehalte beider Oxide aufweisen, wobei deren gemeinsamer Anteil etwa zwischen 70 bis 95 Gew.-% des Oxidgemischs beträgt. Es sind aber auch geringere Gehalte als 70 Gew.-% und höhere Gehalte sonstiger Oxide möglich. Das Oxidgemisch ist wasserfrei. Es besteht ausschließlich oder ganz überwiegend aus Gemischen von Oxiden. Es ist staubförmig, wodurch die Reaktivität gefördert ist. Solche Oxidgemische erhält man z.B. bei Hochtemperatur-Schmelzprozessen aus der Dampf- oder Gasphase, aus der sie beim Abkühlen als feinverteilter Staub abgeschieden werden. Geeignete Oxidgemische entstehen bei Schmelzprozessen der Herstellung verschiedener Korund-Typen, des Mullits ggf. auch bei der Herstellung von elementarem Silicium, Ferrosilicium oder bei der Metallverhüttung. Häufig entsprechen die Oxidgemische nicht der Zusammensetzung des industriellen Schmelzprodukts.

Im Röntgenogramm finden sich keine Hinweise auf kristallines $SiO_2$, während $Al_2O_3$ kristallin zumindest zum Teil als $\alpha$-$Al_2O_3$ (Korund) und in wechselnden Anteilen als alkalihaltiges $\beta$-$Al_2O_3$ vorliegt. Eisenoxide können anwesend sein, z.B. als $Fe_2O_3$. Erdalkalien, besonders CaO, sind ggf. in geringen Mengen anwesend. Geringe Anteile von Fluoriden, $P_2O_5$ oder $ZrO_2$ können in Abhängigkeit vom jeweiligen Schmelzprodukt vorkommen.

Die Oxidgemisch können 7 bis 75 Gew.-% $SiO_2$ und 12 bis 87 Gew.-% $Al_2O_3$ enthalten, wobei hohe $SiO_2$-Gehalte oder hohe $Al_2O_3$-Gehalte vorkommen können.

Feinteilige Füllstoffe, Farbstoffe, wie besonders Pigmentfarbstoffe und zahlreiche Hilfsstoffe können der Formmasse beigegeben werden.

Geeignete Füllstoffe sind vorzugsweise anorganische Stoffe in gemahlener oder verteilter Form, beispielsweise Gesteinsmehle, Basalte, Tone, Feldspäte, Glimmermehl, Glasmehl, Quarzsand oder Quarzmehl, Bauxitmehl, Tonerdehydrat, Abfälle der Tonerde-, Bauxit- oder Korundindustrie, Aschen, Schlacken, Fasermaterialien wie Kunstfasern oder Mineralwolle, inerte nicht wasserlösliche mineralische sowie gegebenenfalls organische Materialien, im Falle von Schaumkörpern leichte Materialien wie Bimsmehl, Vermiculit etc. Metallische Verstärkungen können in die Form eingelegt werden.

- 10 -

Geeignete Schäummittel sind gasbildende Stoffe oder zugesetzte Gase. Peroxide wie das Perborat $NaBO_2 \cdot H_2O_2 \cdot 3H_2O$, organische Peroxide, $H_2O_2$ mit Zersetzungstemperaturen zwischen Zimmertemperatur und der Härtungstemperatur sowie Aluminiumpulver mit einem bei Normaltemperatur nicht angreifbaren Obeflächenfilm oder in unphlegmatisierter Form sind besonders geeignet.

Hierbei werden bei Natriumperborat bzw. $H_2O_2$-Mengen von 0,5 bis 4 Gew.-% bezogen auf die zu schäumende Formmasse und bei Aluminiumpulver 0,05 bis 0,8 Gew.-% als ausreichend angesehen.

Bei fließfähigen Formmassen kann eine Anhärtung durch Erwärmen in der Form, bis eine genügende "Grünfestigkeit" erreicht ist, die das Entformen gestattet, erfolgen. Eine Aushärtung in der Wärme bis zum Erreichen der jeweils besten physikalischen Eigenschaften kann sich anschließen. Die Aushärtung fließfähiger Formmassen in der Form ist ebenfalls möglich. Bei Preßmassen kann stets die Härtung in wirtschaftlicher Weise nach der Entformung erfolgen.

Die Härtungstemperaturen liegen höchstens bei 200 °C und ermöglichen damit den Vorteil der Energieersparnis gegenüber zahlreichen traditionellen Erzeugnissen z.B. der Baukeramik.

Die Temperaturen der Härtung liegen allgemein bei 50 bis 200 °C. Die Anhärtung in der Form kann bei 50 bis 150 °C, eine weitere Härtung bei 80 bis 200 °C erfolgen. Die Härtungszeiten liegen etwa zwischen 0,1 und 3 Stunden.

Der Preßdruck bei der Verpreßung liegt im Bereich von 10 bis 500 bar.

Bei der Härtung erfolgt im Regelfalle kein Wasserverlust.

Die Trocknung erfolgt ohne Hilfe technischer Maßnahmen von selbst bei der Lagerung an Luft oder bevorzugt bei erhöhter Temperatur.

- 11 -

Die Komponenten können in beliebiger Reihenfolge miteinander vermischt werden. Die festen Bestandteile und die flüssigen Bestandteile werden mit Hilfe eines Rührers oder gegebenenfalls durch Kneten gut gemischt.

In der Zeichnung werden die aus den Formmassen hergestellten Formkörper gemäß der Erfindung an Ausführungsbeispielen gezeigt und anhand dieser näher erläutert. Es zeigen:

Fig. 1   ein rechteckiges Bauteilverkleidungselement in drei Ansichten,

Fig. 2   eine Anordnung von rechteckigen Bauteilverkleidungselement nach Fig. 1 als Teil einer Gebäudefassade und drei Ansichten.

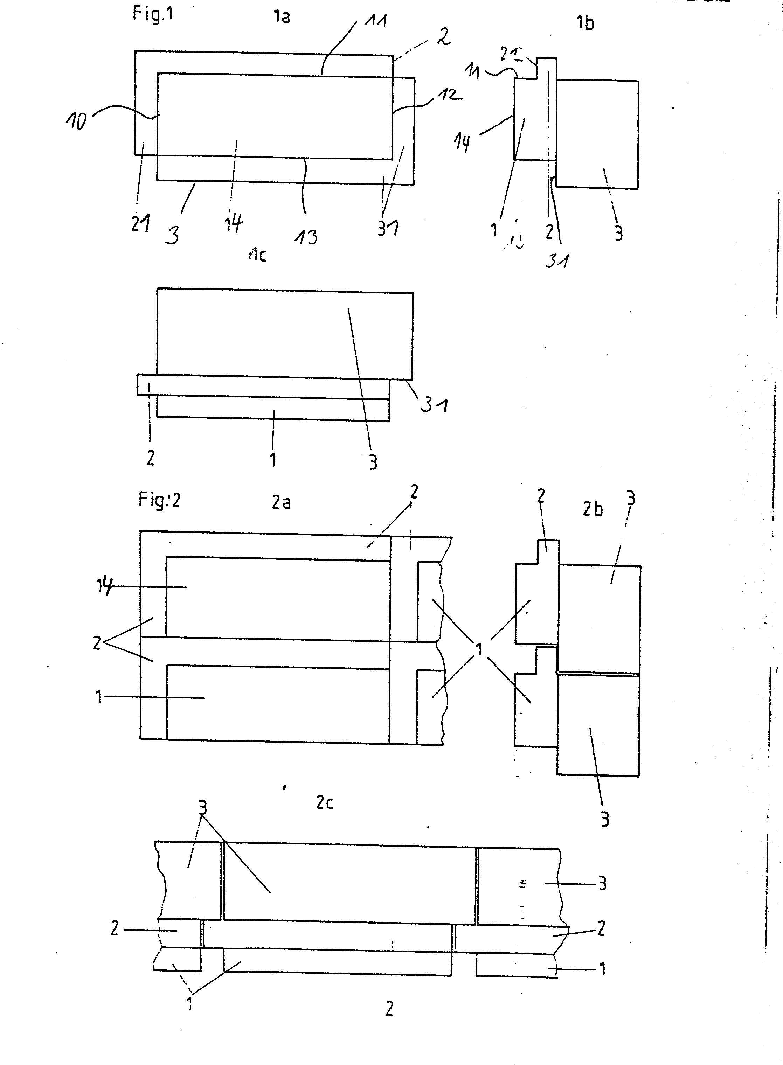

Die in Fig. 1 in Seitenansicht 1a, Schnitt 1b und Aufsicht 1c dargestellte Bauteilverkleidung ist ein Verbundformkörper aus einem massiven Formkörper 1, 2 und dem z.B. angegossenen Schaumformkörper 3, welche in einer gemeinsamen Form durch Eingießen einer nicht schäumbaren Masse und Aufgießen einer schäumbaren Formmasse, die den Schaumteil 3 bildet, durch Härten hergestellt wurde. Die in der Fig. 1 in der Seitenansicht 1a, dem Schnitt 1b und der Aufsicht 1c dargestellte Bauteilverkleidung weist den Formkörper 1, 2 auf, dessen freiliegende Außenfläche 14 die ggf. profilierte Sichtfläche darstellt. An zwei aufeinanderfolgenden Seitenflächen 10, 11 des Formkörpers 1 sind vorstehende umlaufende Rippen 2 von rechteckigem Querschnitt ausgebildet und ggf. farbig gestaltet sein können. Der angegossene Schaumkörper 3 ragt an den beiden anderen aneinandergrenzenden Seitenflächen 12, 13 über den massiven Formkörper 1, etwa der Freite der überstehenden Rippen 2 entsprechender Breite 21 hinaus. Demgemäß bilden die Rippen 2 auf zwei Seiten des Bauteilverkleidungselementes Verankerungsstege und auf den beiden weiteren Seiten

- 12 -

bildet der Schaumkörper Auflageflächen 31 für die Rippen der angrenzenden Bauteilverkleidungen zu einem Verbund in Art eines Mauerwerks bei Aufbau einer Gebäudefassade. Der in Fig. 2 in der Seitenansicht 2a, dem Schnitt 2b und der Aufsicht 2c gezeigte Verbund einer Gebäudefassade aus rechteckigen Bauteilverkleidungen zeigt die dem Betrachter zugewandten Sichtflächen 14 und die rechteckigen Rippen 2, die abgesetzt sind und als Scheinfuge wirken. Die rechteckigen Rippen 2 wirken im Verbund weiterhin als Verankerungsstege gegenüber benachbarten Bauteilverkleidungen, ebenso wie die nach unten und nach einer Seite ragenden vorstehenden Auflageflächen 31 des Schaumkörper 3. Die aus schäumbarer organischer Formmasse gemäß der Erfindung gegossenen und mit der Sichtfläche durch Aufgießen fest verankerten Schaumkörper 3 bewirken durch ihre Dicke eine Wärmedämmung, welche durch Aneinanderliegen der Schaumkörper 3 aller Bauteilverkleidungen eine praktisch geschlossene Wärmedämm- und Schalldämmschicht bilden, wobei zudem durch die Rippen 2 keine zur Sichtseite durchgehenden Fugen bestehen. Im allgemeinen können daher die Bauteilverkleidungen durch die gegebene Verankerung und die Maßhaltigkeit von Rippen und Formkörperoberflächen ohne Verankerung aufeinandergelegt werden, so daß lediglich die Rückseiten der Schaumkörper 3 z.B. durch einen Kleber an der Wand zu verankern ist.

An den nachfolgenden Beispielen wird das erfindungsgemäße Verfahren und Produkt näher erläutert:

- 13 -

Beispiel 1

100 g einer Lösung von geällter amorpher Kieselsäure in einer Kaliumhydroxid-Lösung mit einem Wassergehalt von 47 Gew.-% und einem Molverhältnis von $SiO_2 : K_2O$ von 1,5 werden 100 g eines staubförmigen reaktionsfähigen Oxidgemischs mit Gehalten von 35 Gew.-% amorphem $SiO_2$, 55 Gew.-% Aluminiumoxid und weiteren Oxiden sowie mit feingemahlenen Füllstoffen, nämlich 100 g Quarzsand, 100 g Quarzmehl und 15 g einer Mischung aus synthetisch hergestellten Fasern aus Calciumsilikat und Polyacrylnitrilfasern im Gewichtsverhältnis 1:1 intensiv gemischt und in eine Form gegossen, die eine Natursteinstruktur aufweist. Nach Entlüften durch Rütteln wird eine Schaumstoffplatte einer Dicke von 15 mm aus Polystyrol aufgelegt und die Masse wird in geschlossener Form 30 Minuten bei 90°C gehärtet. Nach dem Entformen und Trocknen bei 85°C wird die Sichtfläche des Formkörpers mit einem wetterfesten Harzlack lackiert.

Beispiel 2

70 g Kaliwasserglas mit einem Wassergehalt von 60 Gew.-% und einem Molverhältnis $SiO_2 : K_2O$ von 2,9 : 1 werden mit 14 g festem KOH (90 Gew.-%ig) unter Kühlung auf Temperaturen unter 30°C gemischt. Darauf werden 70 g eines staubförmigen reaktionsfähigen Oxidgemischs mit Gehalten von 8,5 % amorphem $SiO_2$, 81 Gew.-% $Al_2O_3$ und weiteren Oxiden, sowie die gemahlenen Füllstoffe 25 g Schamotte, 25 g Schiefermehl, 25 g Basaltmehl, 25 g Quarzsand und 10 g Glasfaser sowie 5 g Ruß mit der Lösung vermischt und geknetet und anschließend in eine Form mit der Struktur von Naturschiefer gegossen, entlüftet, 30 Minuten bei 80°C gehärtet und nach der Entformung bei 80°C nachgetrocknet. Das schwarze Material ist nach einer Lackierung als Wandbelag einsatzfähig und kann z.B. mit einem vorgeformten Schaumstoffkörper verbunden werden.

– 14 –

## Beispiel 3

75 g einer Lösung hergestellt aus KOH, Wasser und amorpher wasserhaltiger Kieselsäure mit einem Wassergehalt von 52 Gew.-% mit einem Molverhältnis von $SiO_2 : K_2O$ von 1,3 : 1 werden mit 120 g eines Oxidgemischs mit Gehalten von 47 Gew.-% amorphem $SiO_2$, 43 Gew.-% $Al_2O_3$ und weiteren Oxiden, als Füllstoffe mit 250 g einer Flugasche aus einem Kraftwerk, 50 g Quarzmehl sowie Faser- und Farbstoffen in einem Kneter intensiv durchmischt, mit Hilfe der Schlitzöffnung einer Schneckenpresse zu einem Band extrudiert, das anschließend geschnitten, in Form gepreßt, bei einer Temperatur von 85 °C gehärtet wird. Durch die Formgebung haben die Formkörper die Oberflächenstruktur einer Bruchsteinmauer.

Auf diese Formkörper wird nun eine schäumfähige anorganische Mischung wie im Beispiel 6 beschrieben, aufgebracht, ausgeschäumt und gehärtet.

Nach der Trocknung werden die Formteile mit einem Bautenschutzmittel auf Basis eines Alkoxialkylsilans imprägniert und als Fassadenverkleidung eingesetzt.

## Beispiel 4

Festes Wasserglas mit einem $SiO_2 : K_2O$ Mol-Verhältnis von 3 : 1 wird mit einer wässrigen KOH-Lösung von 50 Gew.-% gelöst und auf das Molverhältnis $SiO_2 : K_2O$ von 2 : 1 und einen Wassergehalt von 48 Gew.-% gebracht. Diese Lösung wird mit einem Oxidgemisch mit Gehalten von 70 Gew.-% amorphem $SiO_2$, 14 Gew.-% $Al_2O_3$ und weiteren Oxiden im Gewichtsverhältnis 1:1,5 gemischt und mit 200% Füllstoffen, bezogen auf die Menge der Reaktanden, aus gleichen Teilen Rotmasse (Abfallprodukt der Aluminiumherstellung),Quarzsand, Quarzmehle und Schamotte geknetet. Die Masse wird in Form mit Struktur handgeformter Ziegel gepreßt unter Druck bei 80°C 30 Minuten ausgehärtet. Nach der Entformung erfolgt

- 15 -

die Aushärtung bei 90°C. Anschließend wird eine Anordnung von mehreren Formkörpern mit Ziegelformat mit Fugenabstand mit wärmedämmenden Schaummaterialien auf organischer oder anorganischer Basis durch Hinterschäumen fest miteinander verbunden.

Beispiel 5

75 g einer Lösung von amorpher wasserhaltiger Kieselsäure in KOH mit einem Wassergehalt von 50 Gew.-% und einem Mol-verhältnis $SiO_2 : K_2O$ von 1,2 : 1 werden hergestellt, auf Zimmertemperatur gekühlt und mit 150 g eines Oxidgemischs mit 30 Gew.-% amorphem $SiO_2$, 60 Gew.-% $Al_2O_3$ und weiteren Oxiden sowie gemahlenen Füllstoffen in Form von 100 g Feldspat, 50 g Basaltmehl, 50 g Quarzmehl und 50 g der genannten Flugasche intensiv gemischt, in Formen gefüllt und entsprechend Beispiel 1 getrocknet und gehärtet und verarbeitet.

Beispiel 6

200 g einer kalialkalischen Lösung von wasserhaltiger amorpher Kieselsäure enthaltend 53 Gew.-% $H_2O$, 23,5 Gew.-% $SiO_2$ und 23,5 Gew.-% $K_2O$ werden mit 400 g eines Oxidgemischs mit Gehalten von 46 Gew.-% amorphem $SiO_2$ und 43 Gew.-% $Al_2O_3$ sowie $Fe_2O_3$ und weiteren Oxiden und als Schäummittel 15 g $NaBO_2 \cdot H_2O_2 \cdot 3H_2O$ homogen gemischt und in eine allseitig verschließbare Form von geeignetem Volumen gegossen, wobei in der Form bereits der ausgehärtete massive Formkörper für das Sichtteil liegt. Die verschlossene Form wird auf ca. 80°C aufgeheizt, wodurch Sauerstoff freigesetzt wird und die Masse aufschäumt. Der Formkörper ist in 30 Minuten gehärtet und kann entformt werden. Der entformte Schaumstoffkörper wird weitere 30 Minuten bei Temperaturen von 90°C getrocknet. Die Dichte des erhaltenen offenporigen Schaums liegt bei 450 kg/m$^3$.

- 16 -

Beispiel 7

150 g einer kalialkalischen Lösung von amorpher wasserhaltiger Kieselsäure mit einem Gehalt von 48 Gew.-% $H_2O$ und $SiO_2$ und $K_2O$ im Molverhältnis von 1,5 : 1 werden mit 250 g eines Oxidgemischs mit Gehalten von 70 Gew.-% amorphem $SiO_2$ und geringen Gehalten von $Al_2O_3$ und weiteren Oxiden und als Treibmittel mit 0,5 g Aluminiumpulver (phlegmatisiert mit dem Ca-Salz einer Fettsäure) vermischt und in eine Form gegossen. Nach Schließen der Form bis auf eine kleine Bluteröffnung (zum Entweichen überschüssiger Gasmengen) wird durch Erhitzen auf 80°C die Masse in 10 Minuten geschäumt und gehärtet. Nach dem Entformen wird bei 80°C nachgetrocknet. Der entstandene Schaumkörper hat eine Dichte von 380 kg/m$^3$.
Durch Einlage eines massiven Formkörpers, z.B. hergestellt nach Beispiel 2 wird der gewünschte Verbund für die Bauteilverkleidungsplatte geschaffen.

Beispiel 8

Eine kalialkalische Kieselsäurelösung, hergestellt aus amorphem wasserhaltigen Siliciumdioxid und KOH-Lösung, mit einem Molverhältnis $SiO_2$ : $K_2O$ = 1,4 : 1 wird mit Oxidgemisch, enthaltend 50 Gew.-% amorphes $SiO_2$, 35 Gew.-% $Al_2O_3$ und weitere Oxide im Gewichtsverhältnis 1:1 gemischt und nach Zugabe von 10 Gew.-% Glimmer und 0,3 Gew.-% Aluminiumpulver (unphlegmatisiert) in ca. 50 Minuten geschäumt und durch die entstehende Reaktionswärme gehärtet, wobei ein zuvor geformter organischer Schaum (EPS, PUR oder Polyethylen) als Unterlage für die zu schäumende anorganische Masse dient und durch die Härtung mit dieser verbunden wird. Dieser Vorverbund kann z.B. mit einem Sichtteil gemäß Beispiel 2 versehen werden, in dem der Vorverbund in die Form eingebracht wird und mit der aufgebrachten massiven Formmasse während der Aushärtung sich verbindet.

1 Patentansprüche

1. Bauteilverkleidung, insbesondere Fassadenplatte, d a d u r c h   g e k e n n z e i c h n e t , daß sie einen massiven den Sichtteil bildenden Formkörper (1) aus einer ausgehärteten anorganischen Formmasse mit einem spezifischen Gewicht von 1,3 bis 2,5 g/cm$^3$, vorzugsweise 1,5 bis 2,0 g/cm$^3$, hergestellt aus

10 bis 30 Gew.-% einer wäßrigen kalialkalischen Kaliumsilikatlösung,

15 bis 40 Gew.-% eines reaktionsfähigen staubförmigen Oxidgemisches mit Gehalten von amorphem $SiO_2$ und Aluminiumoxyd und

20 bis 75 Gew.-% Füllstoffe

und       einen mit dem Sichtteil verbundenen Schaumkörper (3) auf Basis von anorganischem und/oder organischem Schaumstoff enthält.

2. Bauteilverkleidung nach Anspruch 1, dadurch gekennzeichnet, daß an dem mit einer insbesondere rechteckigen Grundfläche ausgebildeten Formkörper (1) längs zweier aufeinanderfolgenden Seiten (10, 11) eine mit der Unterseite des Formkörpers abschließende vorstehende Rippe (2) angeformt ist und der Schaumstoffkörper (3) im Bereich der Rippen (2) fluchtend mit den Seiten des Formkörpers (1) ausgebildet ist und längs der beiden von Rippen freien Seiten (13, 14) des Formkörpers (1) in einer etwa der Breite der Rippen entsprechenden Breite (3a) über den Formkörper (1) vorsteht.

3. Bauteilverkleidung nach Anspruch 1 oder 2, dadurch gekennzeichnet, daß der Schaumstoffkörper aus einer anorganischen ausgehärteten und geschäumten Formmasse hergestellt aus

20 bis 60 Gew.-% einer wäßrigen kalialkalischen Kaliumsilikatlösung

30 bis 80 Gew.-% eines reaktionsfähigen staubförmigen Oxidgemisches mit Gehalten von amorphem $SiO_2$ und Aluminiumoxyd und

0 bis 50 Gew.-% Fillstoffe und

0,05 - 5 Gew.-% Schäummittel mit einer Temperatur der Gasbildung zwischen 20 und 95°C

besteht.

4. Bauteilverkleidung nach Anspruch 3, dadurch gekennzeichnet, daß 0,5 bis 4 Gew.-% Natriumperborat, bzw. $H_2O_2$, bezogen auf die geschäumte Formmasse als Schäummittel enthalten sind.

5. Bauteilverkleidung nach Anspruch 3, dadurch gekennzeichnet, daß 0,05 bis 0,8 Gew.-% Aluminiumpulver, bezogen auf die geschäumte Formmasse als Schäummittel enthalten sind.

6. Bauteilverkleidung nach einem der Ansprüche 1 bis 3, dadurch gekennzeichnet, daß als Fillstoffe in feinteiliger Form Gesteinsmehle, Basalte, Tone, Feldspäte, Glimmermehl, Glassand, Quarz, Bauxit, Tonerdehydrat, Abfälle aus Tonerde-, Korund-, Bauxitherstellung, Aschen, Schlacke, Fasern, wie Kunststoffasern, Mineralfasern, Vermiculite, Bimsmehl o.dgl. und Mischungen hiervon in den Formmassen enthalten sind.

7. Bauteilverkleidung nach einem der Ansprüche 1 bis 6, dadurch gekennzeichnet, daß die Sichtfläche des Sichtteiles strukturiert, geprägt, ornamentiert o.dgl. ausgebildet ist.

8. Bauteilverkleidung nach einem der Ansprüche 1 bis 7, dadurch gekennzeichnet, daß in der Formmasse Verstärkungseinlagen aus Metall und/oder Kunststoffen und/oder Glasfasern vorgesehen sind.

9. Bauteilverkleidung nach Anspruch 2, dadurch gekennzeichnet, daß der Schaumkörper aus Polystyrol-, Phenolharz- oder Polyurethanschaum besteht.

10. Verfahren zur Herstellung einer Bauteilverkleidung nach einem der Ansprüche 1 bis 9, dadurch gekennzeichnet, daß in eine Feststoffmischung aus 15 bis 40 Gew.-Teilen reaktionsfähigem Oxidgemisch mit Gehalten von amorphem $SiO_2$ und Aluminiumoxid und

20 bis 75 Gew.-% Füllstoffen,
10 bis 30 Gew.-% einer 28 bis 65 Gew.-% wäßrigen

kalialkalischen Lösung von Kaliumsilikat in der 0,5 bis 2,5 Gew.-Teile $K_2O$ bevorzugt 0,6 bis 1,6 Gew.-Teile $K_2O$ je 1 Gew.-Teil gelöstes $SiO_2$ enthalten sind, eingemischt werden und diese Mischung in eine Form zu dem den Sichtteil bildenden Formkörper gegossen bzw. eingeschüttet, dann ggf. entlüftet und verpreßt und bei Temperaturen von 50 bis 200°C vorzugsweise unter 100°C ausgehärtet wird und danach eine schäumfähige Mischung aus 20 bis 60 Gew.-% einer wäßrigen kalialkalischen Kaliumsilikatlösung, in der 0,5 bis 2,5 vorzugsweise 0,6 bis 1,6 Gew.-Teile $K_2O$ je Gew.-Teil gelöstes $Si/_2$ enthalten sind,

- 20 -

30 bis 80 Gew.-% eines reaktionsfähigen staubförmigen Oxidgemisches mit Gehalten von amorphem $SiO_2$ und Aluminiumoxid, ggf. bis zu 50 Gew.-% Füllstoffen sowie 0,05 bis 5 Gew.-% Schäummittel mit einer Temperatur der Gasbildung zwischen $20^\circ C$ und $95^\circ C$ in die Form auf den Sichtteil geschüttet und unter Ausschäumen und Aushärten bei Temperaturen von 50 bis $200^\circ C$, vorzugsweise unter $100^\circ C$ zu dem Schaumkörper sich mit dem Sichtteil verbindet.

11. Verfahren nach Anspruch 10, dadurch gekennzeichnet, daß das Aushärten von Sichtteil-Mischung und Schaumkörper-Mischung gleichzeitig erfolgt.

12. Verfahren nach Anspruch 10, dadurch gekennzeichnet, daß ein organischer Schaumstoffkörper derart in die Form eingelegt wird, daß beim Ausschäumen und Aushärten der anorganischen Schaumkörper-Mischung ein Verbund hergestellt wird.

0111862

Fig.1  1a

1c

Fig:2  2a  2b

2c

Dynamit Nobel Aktiengesellschaft  Troisdorf